# EUROPEAN PATENT APPLICATION

(11) **EP 2 549 705 A1**
(43) Date of publication of application: **23.01.2013**
(21) Application number: 11756026.8
(22) Date of filing: 15.02.2011
(51) Int. Cl.: H04L 27/00, H04L 1/00

(54) **TRANSMITTER APPARATUS, TRANSMISSION METHOD AND TRANSMISSION SYSTEM**

(30) Priority: 16.03.2010 JP 2010058982
(71) Applicant: NEC Corporation, Tokyo 108-8001 (JP)
(72) Inventor: NAKAJIMA, Hiroaki, Tokyo 108-8001 (JP)
(74) Representative: Betten & Resch
(86) International application number: PCT/JP2011/053609
(87) International publication number: WO 2011/114837

(57) **Abstract**

There is a problem that if a transmitter apparatus having an adaptive modulation function is to be configured to divide data for transmission, the structure of the transmitter apparatus will be complicated and the cost thereof will be raised. In order to solve this problem, a transmitter apparatus comprises: a dividing means for dividing input data into a plurality of pieces of data; a plurality of transmitting means for transmitting the pieces of data as divided to respective transmission paths; and a modulation scheme deciding for deciding, from modulation schemes associated with the conditions of the transmission paths, a modulation scheme, which to be used by the transmission means, such that the difference in transmission speed between the pieces of data transmitted by the plurality of transmitting means its within a predetermined range.

## Description

### TECHNICAL FIELD

The present invention relates to a transmitter apparatus and a transmission method which divide and transmits data, in in particular a transmitter apparatus, a transmission method and a transmission system including an adaptive modulation function.

### BACKGROUND ART

A technology is known, in which data is transmitted in parallel by a plurality of transmitter apparatuses to enlarge a transmission capacity of a transmission section. For example, a technology exists, in which when data having a frame configuration, like a LAN (Local Area Network), data is divided for each frame and transmitted in parallel by the plurality of transmitter apparatuses. Patent document 1 and Patent document 2 disclose the technology that data is divided and transmitted.

Patent document 1 discloses a configuration of a communication device which forms a plurality of logical links with an opposite communication device, and divides and transmits transmission data. The communication device described in Patent document 1 synthesizes the received data in order of a transmission number to restore the divided data into the original data.

Patent document 2 describes a configuration of an edge device which generates divided frames by dividing a MAC frame, a length of which is longer than a predetermined length, which flows in the broad area Ethernet network ("Ethernet" is registered trademark). When transferring the divided frames from the network to the outside, the edge device described in Patent document 2 combines the divided frames.

The communication device described in Patent documents 1 and 2 divides the transmission data and transmits them in parallel to enlarge the transmission capacity.

As a method of optimizing the transmission capacity depending on a condition of a transmission path, Patent document 3 describes an adaptive modulation function. A transmitter apparatus with the adaptive modulation device decides a modulation scheme on the basis of the condition of the transmission path so that a transmission error is lower than an allowable amount.

### PRIOR ART DOCUMENT

### Patent Document

Document 1] Tokukai 2006-279467 A (paragraphs [0059] to [0061])
[Patent Document 2] Tokukai 2005-012831 A (paragraph [0039])
[Patent Document 3] Tokukai-shou 57-159148 A (line 20 of upper right to line 8 of lower left in page 3)

### SUMMARY OF INVENTION

### Technical Problem

In the transmitter apparatus with the adaptive modulation function described in Patent document 3, when the transmission data is divided and the pieces of data are transmitted by the plurality of the transmitter apparatuses, each transmitter apparatus which transmits the divided data may choose a different modulation scheme. In general, data is transmitted at different transmission speeds for different modulation schemes. Thus, if the divided data is transmitted with the different modulation scheme, the transmitter apparatus on the reception side may receive the data for each piece of the divided data at a different speed.

Therefore, when the transmitter apparatus with the adaptive modulation function divides the data and transmits them in parallel, the transmitter apparatus on the reception side requires memory with a large capacity for storing the pieces of data while the original data before the division is restored from the received pieces of data. As a result, when the divided data are transmitted using the transmitter apparatus with the adaptive modulation function, a memory with large capacity should be installed so that the configuration of the transmitter is complicated and becomes costly.

Patent documents 1 to 3 do not disclose any means for solving the problem which arises when the transmitter apparatus with the adaptive modulation function divides data and transmits them.

An object of the present invention is to provide the means for solving the problem described above.

### Solution to Problem

The transmitter apparatus of the invention includes a dividing means for dividing input data into a plurality of pieces of date, a plurality of transmitting means for transmitting the pieces of data as divided to respective transmission paths, and a modulation scheme deciding means for deciding, from among modulation schemes associated with the conditions of the transmission paths, a modulation scheme, that is to be used by the transmission means, such that a difference in transmission speeds between the pieces of data transmitted by the plurality of transmitting means is within a predetermined range.

The transmission method of the invention includes dividing input data into a plurality of pieces of data, transmitting the pieces of data as divided to respective transmission paths, and deciding, from among modulation schemes associated with the conditions of the transmission paths, a modulation scheme of the data, such that a difference in transmission speeds between the pieces of data that is transmitted is within a predetermined range.

### Advantageous Effects of Invention

The present invention includes the effect that when the transmitter apparatus with the adaptive modulation function divides data and transmits them, the transmitter apparatus does not get complicated and price increase thereof is suppressed.

### BRIEF EXPLANATION OF DRAWINGS

[FIG. 1] is a diagram illustrating a configuration of a wireless transmission system of a first exemplary embodiment.
[FIG. 2] is a diagram illustrating division and integration of a MAC frame in the first exemplary embodiment.
[FIG. 3] is a diagram illustrating a processing procedure of the MAC frame which is performed when one of data outputted by a frame dividing unit is invalid data.
[FIG. 4] is a diagram illustrating a configuration of a frame integrating unit.
[FIG. 5] is a diagram explaining a bit width elongation procedure.
[FIG. 6] is a diagram illustrating a wireless transmission system of a second exemplary embodiment.
[FIG. 7] is a diagram illustrating a configuration of a transmitter apparatus of a third exemplary embodiment.

### DESCRIPTION OF EMBODIMENTS

### [First exemplary embodiment]

It is required that data is modulated using a modulation scheme in which modulation level is large as much as possible, in order to enlarge a transmission capacity of a wireless transmission system. However, as the modulation level of the modulation scheme becomes large, resistance of a wireless signal to variation of a transmission condition of a wireless transmission path is generally reduced. On the other hand, if the modulation level decreases, resistance of a wireless signal to variation of a transmission condition increases though a transmission capacity is reduced.

A wireless transmission system with an adaptive modulation function optionally a more suitable modulation scheme depending on a transmission path condition to reduce a transmission error and enlarge a transmission capacity. A procedure of the transmission system with the adaptive modulation function is well-known. Detailed descriptions on the adaptive modulation function are omitted.

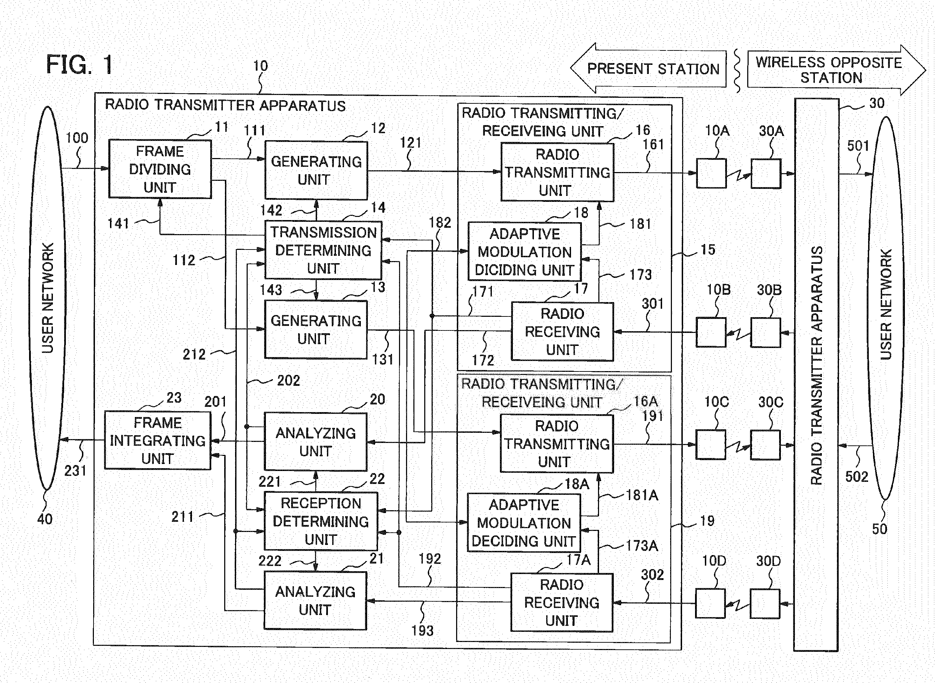

FIG. 1 is a diagram illustrating a configuration of a wireless transmission system of a first exemplary embodiment.

A configuration of a radio transmitter apparatus 10 is described with reference to FIG. 1. In FIG. 1, a configuration and a function of a radio transmitter apparatus 30 is the same as that of the radio transmitter apparatus 10. Descriptions on the configuration and the function of the radio transmitter apparatus 30 are omitted. A configuration of a radio transmitting/receiving unit 19 of the radio transmitter apparatus 10 is the same as that of a radio transmitting/receiving unit 15. Detailed descriptions on the radio transmitter apparatus 30 and the radio transmitting/receiving unit 19 are, therefore, omitted. In FIG. 1, each part of the radio transmitting/receiving unit 19 corresponding to each part of the radio transmitting/receiving unit 15 is given a reference numeral of the radio transmitting/receiving unit 15 to which "A" is further added.

The radio transmitter apparatus 10 is opposed to the radio transmitter apparatus 30, and the apparatuses transmit a MAC frame to each other. The radio transmitter apparatus 10 divides an external LAN signal 100 inputted from a user network 40, and transmits them to the radio transmitter apparatus 30 as a radio signal. The radio transmitter apparatus 30 restores data from the radio signal received from the radio transmitter apparatus 10, and outputs it to a user network 50 as an external output LAN signal 501.

On the contrary, the radio transmitter apparatus 30 divides an external LAN signal 502 inputted from user network 50, and transmits them to the radio transmitter apparatus 10 as a radio signal. The radio transmitter apparatus 10 restores data from the radio signal received from the radio transmitter apparatus 30, and outputs it to a user network 40 as an external output LAN signal 231.

The radio transmitter apparatus 10 includes a frame dividing unit 11, generating units 12 and 13, a transmission determining unit 14, the radio transmitting/receiving units 15 and 19, analyzing units 20 any 21, a reception determining unit 22, and a frame integrating unit 23.

Relation of connection between parts of the radio transmitter apparatus is mainly described below. Details of operations are explained in a section "explanation on operations of the exemplary embodiment".

The frame dividing unit 11 receives the external input LAN signal 100 from the user network 40 and a division control signal 141 from the transmission determining unit 14. The external input LAN signal 141 is a MAC frame which is transmitted to the user network 50. The frame dividing unit 11 divides the MAC frame of the external LAN signal 100 into two parts, and outputs them to the generating unit 12 and the generating unit 13 as a divided LAN signal 111 and a divided LAN signal 112, respectively.

The generating unit 12 receives the divided LAN signal 111 inputted from the frame dividing unit 11 and a multiple alarm signal 142 inputted from the transmission determining unit 14. The generating unit 12 multiplexes the divided LAN signal 111 and the multiple alarm signal 142 and outputs it to a radio transmitting unit 16 in the radio transmitting/receiving unit 15 as a transmission signal 121.

The generating unit 13 receives the divided LAN signal 112 inputted from the frame dividing unit 11 and a multiple alarm signal 143 inputted from the transmission determining unit 14. The generating unit 13 multiplexes the divided LAN signal 112 and the multiple alarm signal 143 and outputs it to a radio transmitting unit 16A in the radio transmitting/receiving unit 19 as a transmission signal 131.

The radio transmitting/receiving units 15 and 19 are described below.

The radio transmitting/receiving unit 15 includes the radio transmitting unit 16, a radio receiving unit 17, and an adaptive modulation deciding unit 18. The radio transmitting/receiving unit 19 also includes the radio transmitting unit 16A, a radio receiving unit 17A, and an adaptive modulation deciding unit 18A. A configuration and operations of the radio transmitting/receiving unit 19 are the same as those of the radio transmitting/receiving unit 15. An explanation on each part of the radio transmitting/receiving unit 19 is therefore omitted.

The radio transmitting unit 16 receives the transmission signal 121 from the generating unit 12. The radio transmitting unit 16 modulates the transmission signal 121 on the basis of the modulation scheme designated by a modulation control signal 181, and generates a radio signal 161. The radio signal 161 is transmitted from an antenna 10A to an opposite antenna 30A connected with the radio transmitter apparatus 30 as a radio signal.

An antenna 10B connected with the radio receiving unit 17 receives a radio signal 301 which is generated by the radio transmitter apparatus 30 and is transmitted by an antenna 30B via the antenna 10B. The radio receiving unit 17 demodulates the inputted radio signal 301 and generates a reception signal 172, and outputs the reception signal 172 to the analyzing unit 20. The radio receiving unit 17 outputs a radio alarm signal 171 to the transmission unit 14 and to the reception determining unit 22. The radio alarm signal 171 includes a reception power reduction alarm indicating that reception power of the radio receiving unit 17 is reduced. The radio receiving unit 17 further outputs a reception power monitoring signal 173 to the adaptive modulation deciding unit 18.

The adaptive modulation deciding unit 18 recognizes radio reception power of a signal received the radio transmitter apparatus 30 which is radio-opposed, from the reception power monitoring signal 173. The adaptive modulation deciding unit 18 chooses a modulation scheme on the basis of the magnitude relationship between the radio reception power and a predetermined threshold value. The adaptive modulation deciding unit 18 outputs the chosen modulation scheme to the radio transmitting unit 16 as the modulation control signal 181.

The adaptive modulation deciding unit 18 transmits and receives information on the modulation scheme to and from the adaptive modulation deciding unit 18A of the radio transmitting/receiving unit 19 using a modulation scheme synchronization signal 182. As a result, the adaptive modulation deciding unit 18 and the adaptive modulation unit 18A can recognize both of the modulation schemes which are chosen based on the transmission signal 121 and the transmission signal 131.

The radio transmitting unit 16A of the radio transmitting/receiving unit 19, the internal configuration of which is the same as that of the radio transmitting/receiving unit 15 performs an operation which is the same as that of the radio transmitting unit 16. That is, the radio transmitting unit 16A modulates and frequency converts the transmission signal 131 inputted from the generating unit 13, and generates a radio signal 191. The radio transmitting unit 16A the radio signal 191 an antenna 10C.

The transmission determining unit 14 receives the radio alarm signal 171, a radio alarm signal 192, a reception alarm signal 202, and a reception alarm signal 212. The transmission determining unit 14 performs a predetermined determining procedure based on conditions of the alarm signals. The determining procedure is described in the section "explanation on of the embodiment". The transmission determining unit 14 outputs the determination result to the frame dividing unit 11 as the division control signal 141. The transmission determining unit 14 outputs the determination result to the generating unit 12 any 13 as the multiple alarm signal 142 and a multiple alarm signal 143.

The radio receiving unit 17 receives the radio signal 301 which is received from the radio transmitter apparatus 30 which is the radio-opposed through the antennas 30B and 10B. The radio receiving unit 17 frequency-converts and demodulates the received radio signal 301. The radio receiving unit 17 outputs the demodulated signal to the analyzing unit 20 as the reception signal 172. The radio receiving unit 17 outputs the reception power reduction alarm indicating that reception power from the radio transmitter apparatus 30 is reduced, to the transmission determining unit 14 and the reception determining unit 22 as the radio alarm signal 171.

The radio transmitting unit 17A of the radio transmitting/receiving unit 19, the internal configuration of which is the same as that of the radio transmitting/receiving unit 15 performs an operation which is the same as that of the radio transmitting unit 17. That is, the radio transmitting unit 17A outputs a reception signal 193 to the analyzing unit 21 and outputs the radio alarm signal 192 to the transmission determining unit 14 and the reception determining unit 22.

The analyzing unit 20 receives the reception signal 172 and an integration control signal 221. The analyzing unit 20 processes the reception signal 172 based on the integration control signal 221, and outputs the process result to the frame integrating unit 23 as an integration LAN signal 201. The analyzing unit 20 outputs an alarm which is detected from the radio alarm signal 171 to the transmission determining unit 14 and the reception determining unit 22 as the reception alarm signal 202.

The operation of the analyzing unit 21 is the same as that of the analyzing unit 20 except that an inputted signal is the reception signal 193 which is outputted from the radio transmitting/receiving unit 19. The analyzing unit 21 receives the reception signal 193 which is outputted from the radio transmitting/receiving unit 19 and an integration control signal 222 which is outputted from the reception determining unit 22. The analyzing unit 21 performs predetermined processing on the reception signal 193 based on the integration control signal 222 and outputs the process result to the frame integrating unit 23 as the integration LAN signal 211. The analyzing unit 21 output the reception alarm signal 212 informing of an alarm detected from the reception signal 193 to the transmission determining unit 14 and the reception determining unit 22.

The frame integrating unit 23 receives the integration LAN signals 201 and 211 outputted by the analyzing units 20 and 21, respectively. The frame integrating unit 23 integrates the inputted two signals and generates the MAC frame. The frame integrating unit 23 outputs the generated MAC frame to the user network 40 as the external output LAN signal 231.

The reception determining unit 22 receives the radio alarm signal 171 outputted by the radio receiving unit 17 and radio alarm signal 192 outputted by the radio transmitting/receiving unit 19. The reception determining unit 22 performs the following determination based on the signals and outputs the determination result to the analyzing units 20 and 21 as the integration control signals 221 and 222, respectively.

### [Explanation on operations of the exemplary embodiment]

Operations of radio transmission system of the first exemplary embodiment are described in detail with reference to FIG. 1 to FIG. 5.

The frame dividing unit 11 of the radio transmitter apparatus 10 of FIG. 1 receives the external input LAN signal 100 from the user network 40 and the division control signal 141 from the transmission determining unit 14.

The frame dividing unit 11 divides the MAC frame of the external LAN signal 100 into two parts on the basis of the division control signal 141. The frame dividing unit 11 outputs one of the external LAN signals 100 divided into two parts to the radio transmitting/receiving unit 15 through the generating unit 12. The frame dividing unit 11 outputs the other of the external LAN signals 100 divided into two parts to the radio transmitting unit 19 through the generating unit 13.

When a division scheme in a time of division of the MAC frame before transmission corresponds to that in a time of integration of the MAC frames reception, the MAC frame may be divided based on an arbitrary procedure. For example, the MAC frame may be divided for each even byte or for each odd byte in the frame. The MAC frame may be divided into upper level bits and lower level bits for each one byte (eight bits) of data which composes the MAC frame.

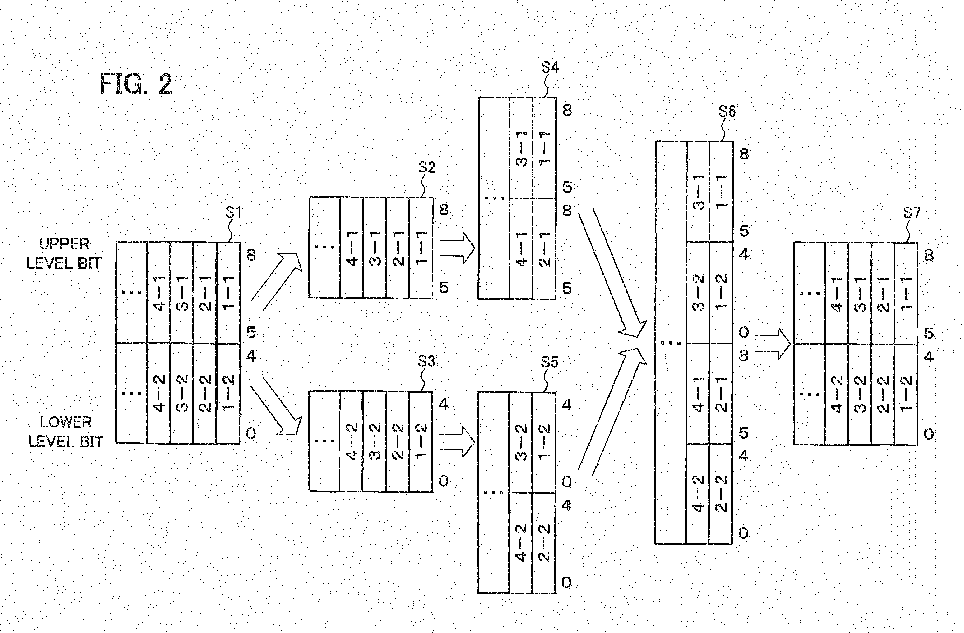

FIG. 2 is a diagram illustrating division and integration of the MAC frame in the first exemplary embodiment. FIG. 2 illustrates, as an example, a form of the MAC frame which is taken when the MAC frame which is data with a unit of one byte (eight bits) (hereinafter referred to as "BYTE data") is transmitted by dividing into upper level bits and lower level bits.

S1 to S3 in FIG. 2 shows procedures of dividing the MAC frame into two parts, upper level bits and lower level bits for one byte of data which composes the MAC frame.

The upper level bits are the fifth bit to the eighth bit of data which is formed by dividing the external LAN signal 100 in a unit of byte, i.e. data indicated in 1-1, 2-1, 3-1, 4-1...... in FIG. 2. The lower bits are the first bit to the fourth bit of data which is formed by dividing the external LAN signal 100 in a unit of byte, i.e. data indicated in 1-2, 2-2, 3-2, .... in FIG. 2. The frame dividing unit 11 divides the external LAN signal 100 (S1) into the divided LAN signal 111 (S2) which is composed of data of the upper level bits and the divided LAN signal 112 (S3).

If the division control signal 141 instructs the dividing unit 11 to stop dividing, the frame dividing unit 11 stops dividing the MAC frame. When stop of dividing the MAC frame is instructed, the frame dividing unit 11 transmits invalid data in an instructed direction of the radio transmitting/receiving unit 15 or the the radio transmitting/receiving unit 19. The frame dividing unit 11 transmits the MAC frame without division in the direction to which the invalid data is not transmitted.

Contents of the invalid data may be ones which can be recognized, at the time reception, that the data is not a a divided MAC frame. If all of the data are "0" or "1", and all of the data which is read out at the time of reception are "0" or "1", the data may be decided as the invalid data on the reception side. If the invalid data includes a specific pattern, the data including the specific pattern may be decided as the invalid data on the reception side when the specific pattern is detected on the reception side.

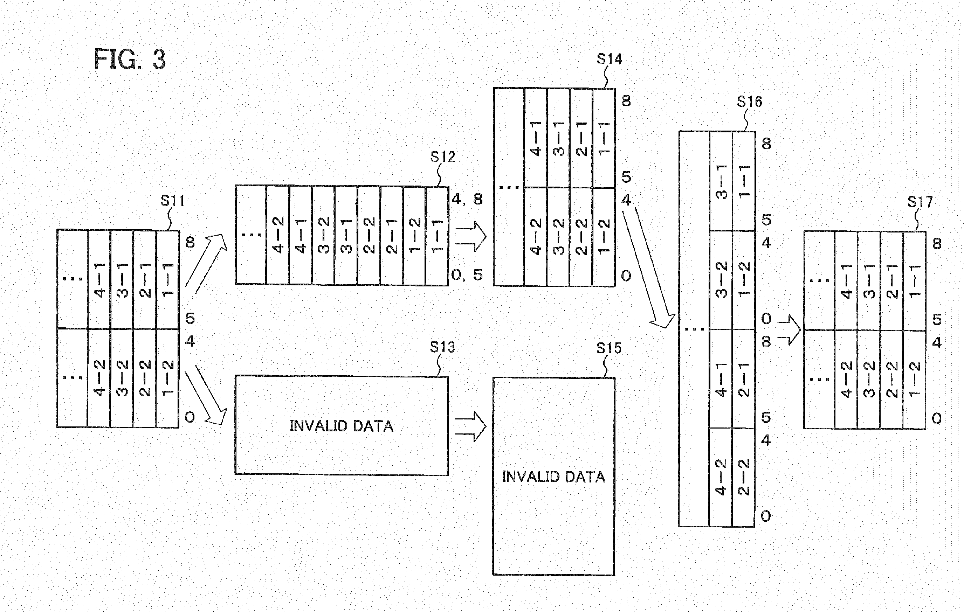

FIG. 3 illustrates a procedure of the MAC frame which is performed when one of the data which is outputted by the frame dividing unit 11 is the invalid data.

S11 to S13 of FIG. 3 illustrates the MAC frames under a situation that the divided data is not transmitted on the system where the lower level bits are transmitted in FIG. 2, and the invalid data is transmitted in place of the divided thereon. The frame dividing unit 11 alternately outputs data of the upper level bits and data of lower level bits in the external LAN signal 100 (S1) as the divided LAN signal 111 (S2). The frame dividing unit 11 outputs the invalid data as the divided LAN signal 112 (S3).

Operations of the generating units 12 and 13 are described. The generating units 12 and 13 in FIG. 1 only differ in an output destination, i.e. the radio transmitting/receiving unit 15 or the radio transmitting/receiving unit 19 from each other. A configuration and operations of the generating unit 12 is the same as those of the generating unit 13. The generating unit 12 is, therefore, described and the generating unit 13 is not described.

The generating unit 12 multiplexes the divided LAN signal 111 received from the frame dividing unit 11 and the multiple alarm signal 142 received from the transmission determining unit 14. The generating unit 12 inserts a synchronization pattern and an error detection code into the multiplexes signal at constant intervals. The generating unit 12 outputs the transmission signal 121 generated in this way, to the radio transmitting/receiving unit 15. The synchronization pattern and the error detection code inserted into the transmission signal 121 at constant intervals are detected by the radio-opposed station 30 and used for estimation of transmission quality.

The generating unit 12 and the generating unit 13 work by the same clock in the same apparatus. Therefore, the timing when the generating unit 12 inserts the synchronization pattern and the error detection code into the divided LAN signal 111 corresponds to the timing when the generating unit 13 inserts the synchronization pattern and the error detection code into the divided LAN signal 112.

The radio transmitting unit 16 receives the transmission signal 121 outputted by the generating unit 12. The radio transmitting unit 16 frequency-converts and modulates the transmission signal 121. The radio transmitting unit 16 modulates the transmission signal 121 based on the modulation scheme designated by the modulation control signal 181. The radio transmitting unit 16 transmits the transmission signal 121 which is frequency-converted and modulated to the antenna 30A of the radio transmitter apparatus 30 opposed thereto as the radio signal 161 through the antenna 10A.

The radio transmitting unit 16A performs the same operation as that of the radio transmitting unit 16. The radio transmitting unit 16A modulates and frequency-converts the transmission signal 131. The radio transmitting unit 16A modulates the transmission signal 131 on the basis of the modulation scheme designated by the modulation control signal 181A. The radio transmitting unit 16A transmits the transmission signal, which is frequency-converted and modulated, to an antenna 30C of the radio transmitter apparatus 30 through the antenna 10C as the radio signal 161.

The adaptive modulation determining unit 18 transmits and receives information on the modulation scheme to and from the adaptive modulation determining unit 18A of the radio transmitter apparatus 19 the modulation scheme synchronization signal 182. The modulation determining units 18 and 18A choose the modulation scheme in accordance with a predetermined procedure so that transmission speeds on the transmission signals 121 and 131 accords with each other. As a result, the data transmitted by the radio transmitter apparatus 15 and the radio transmitter apparatus 19 are received by the radio transmitter apparatus opposed thereto, at the same speed.

The adaptive modulation determining units 18 and 18A can recognize both the modulation scheme designated by the modulation control signal 181 and the modulation scheme designated by the modulation control signal 181A by the modulation scheme synchronization signal 182. Therefore, if the modulation scheme, in which the transmission speed is the lowest, of the modulation scheme recognized by the adaptive modulation determining units 18 and 18A in common is chosen, the adaptive modulation determining units 18 and 18A can choose the same modulation scheme.

The radio receiving unit 17 receives the radio signal 301 from the radio transmitter apparatus 30 which is the radio-opposed station through the antenna 30B and 10B. The radio receiving unit 17 frequency-converts and demodulates the radio signal 301 and outputs it to the analyzing unit 20 as the reception signal 172.

The receiving unit 17 transmits information on a reception alarm, which occurs due to a failure in the radio transmitter apparatus 15 and/or change of a transmission condition of a transmission path, to the transmission determining unit 14 and the reception determining unit 22 as the reception alarm signal 171. The information on a reception alarm includes, for example, an alarm indicating that the reception power falls below a predetermined value. However, contents of the reception alarm may be an alarm related to the condition of the transmission path, the reception signal, or reception procedures, and are not limited to the above example.

In the radio transmitting/receiving unit 19 the configuration of which is the same as the configuration of the radio transmitting/receiving unit 15, the radio receiving unit 17A frequency-converts and demodulates the radio signal 302 and outputs the reception signal 193 to the analyzing unit 21. The radio receiving unit 17A outputs the radio alarm signal 192 detected by the radio signal 302 to the transmission determining unit 14 and the reception determining unit 22.

The analyzing unit 20 receives the reception signal 172 outputted by the radio reception unit 17. The analyzing unit 20 separates the reception signal 172 into the LAN signal and the alarm signal. The LAN signal is data to be transmitted to the user network 40. The analyzing unit 20 outputs the separated LAN signal to the frame integrating unit 23 as the integration LAN signal 201.

The analyzing unit 20 detects an error of the reception signal 172 using the alarm signal separated the reception signal 172 and the error detection code which is inserted at the generating unit of the radio-opposed station, and outputs it as the reception alarm signal 202. If the error occurs and exceeds a predetermined reference value, the analyzing unit 20 generates the alarm information, adds the alarm information to the reception alarm signal 202, and outputs the signal 202 with the information to the transmission determining 14.

The analyzing unit 21 outputs the LAN signal separated from the reception signal 193 to the frame integrating unit 23 as the integration LAN signal 211, like the analyzing unit 20. The analyzing unit 21 outputs the alarm signal separated from the reception signal 193 as the reception alarm signal 212. The analyzing unit 21 adds the alarm information detected in the reception signal 193 to the reception alarm signal 212, and outputs it to the transmission determining 14.

The frame integrating unit 23 receives the integration LAN signal 201 and the integration LAN signal 211. If both the integration LAN signal 201 and the integration LAN signal 211 are not invalid, the frame integrating unit 23 integrates the two signals to generate the MAC frame. If one of the integration LAN signal 201 and the integration LAN signal 211 is invalid data, the frame integrating unit 23 generates the MAC frame using the other integration LAN signal. As a result, the frame integrating unit 23 restores the MAC frame before division at the time of transmission. The frame integrating unit 23 outputs the integrated MAC frame to the user network 40 as the external output LAN signal 231.

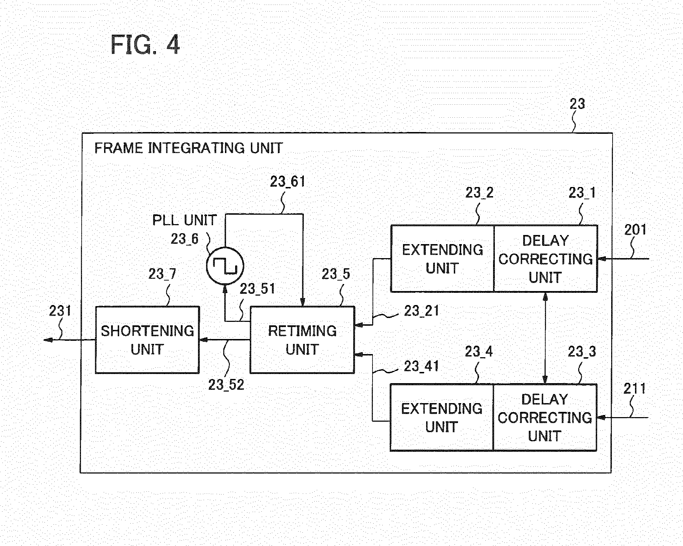

A frame integration procedure in the frame integrating unit 23 is described with reference FIG. 4.

Fig. 4 illustrates a configuration of the frame integrating unit 23. In the frame integrating unit 23 shown in FIG. 4, the integration LAN signal 201 and the integration LAN signal 211 which are transmitted from the analyzing unit 20 and the analyzing unit 21 enter a delay correcting unit 23_1 and a delay correcting unit 23_3, respectively.

The delay correcting unit 23_1 and the delay correcting unit 23_3 detect a difference of propagation delay which occurs due to a difference of electrical length of the transmitting/receiving units 15 and 19, wiring in and/or between devices, or the radio transmission path. The delay correcting unit 23_1 and the delay correcting unit 23_3, specifically, detect the synchronization patterns which are inserted in the generating unit 12 and the generating unit 13, and compare the detection timing with each other, respectively. As a result, the delay correcting unit 23_1 and the delay correcting unit 23_3 can detect the difference of the propagation delay between the integration LAN signal 201 and the integration LAN signal 211.

The delay correcting unit 23_1 and the delay correcting unit 23_3 shift the integration LAN signal 201 and the integration LAN signal 211 each other, respectively, and minimize the difference of the propagation delay between the integration LAN signal and the integration LAN signal 211. The minimum unit by which the integration LAN signal 201 or the integration LAN signal 211 is shifted is a unit of the clock generated from the signals.

In the present exemplary embodiment, after the MAC frame is divided by the frame dividing unit, the divided MAC frames are transmitted on the radio transmission paths and demodulated by the different radio receiving units. Therefore, it is highly likely that when the transmission speed of an extension signal 23_21 is equal to that of an extension signal 23_41, phases of the signals do not accord with each other even if the delay correction of the clock unit is performed in the delay correcting unit 23_1 and the correcting unit 23_3. Dynamic phase fluctuation may occur in transmission data because of fading due to change of the propagation condition of a radio wave. For the reason described above, a phase difference between the pieces of data of the two systems may temporally fluctuate. If the data of the two systems are processed by the clock which is synchronized with one of the data thereof, the other data may not be read out accurately since the phase of the other data deviates from the clock.

In the first exemplary embodiment, the frame integrating unit 23 performs processing, i.e. bit width extension, with respect to the data in an extending unit 23_2 and an extending unit 23_4. Procedures on the bit width extension are described below.

The bit width extension means processing in which width of one bit of the data is extended without changing the data transmission speed by processing data to be processed in parallel.

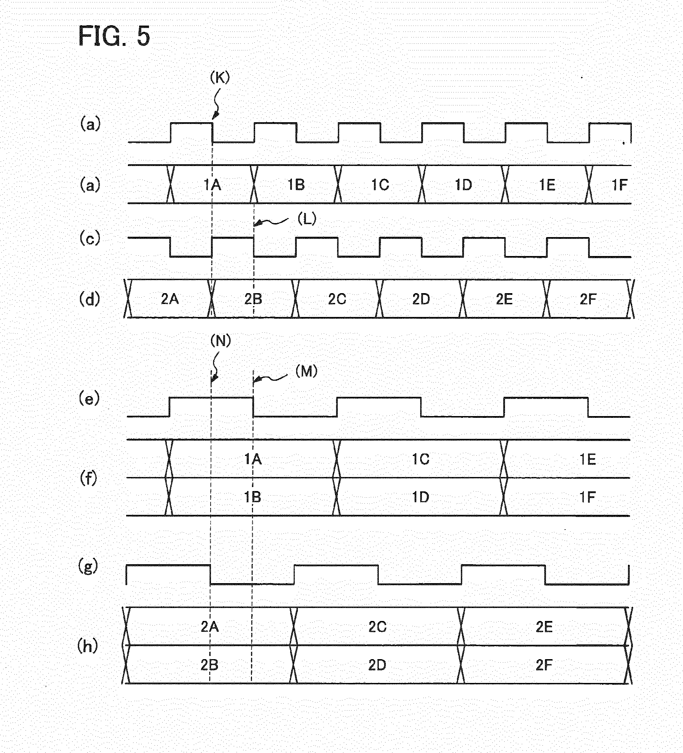

FIG. 5 is a diagram explaining the bit width extension processing.

Suppose that two data lines (hereinafter referred to as "system 1 data", "system 2 data") which are synchronized with different clocks are read out at a falling edge of the clock generated from one data line thereof. When the phase difference between the system 1 data and the system 2 data exists, if timing when a clock which is synchronized with the system 1 data reads out the system 2 data accords with a changing point of the system, the data of the system which is not synchronized with the clock may not be correctly read out.

In FIG. 5, (a) is a system 1 clock, (b) is the system 1 data, (c) is a system 2 clock, and (d) is the system 2 data. Since phase adjustment of the data is performed per a clock unit, if the phase difference between the system 1 data (b) and the system 2 data (d) is around half of a cycle of the clock as shown in FIG. 5, it is not possible to perform adjustment so that the phase difference between the system 1 data and the system 2 data becomes further small.

FIGS. 5 (a) to (d) illustrate falling timing of the system 1 division clock (a) (K) and falling timing of the system 2 division clock (c) (L). If the system 1 data (b) and the system 2 data (d) are read out at the falling timing of the system 1 clock (a) which is synchronized with the system 1 data ((K) in FIG. 5), the falling timing accords with the changing point of the system 2 data (d). In this case, the system 2 data (d) may not be read out correctly.

If the system 1 data (b) and the system 2 data (d) are read out at the falling timing of the system 2 clock (c) ((L) in FIG. 5), the falling timing accords with the changing point of the system 1 data (b). In this case, the system 1 data (b) may not be read out correctly.

That is, if the phase difference between the system 1 data (b) and the system 2 data (d) is around half of a cycle of the clock, even though the clock of the system 1 or the system 2 is used, both the system 1 data (b) and the system 2 data (d) may not be read out correctly.

In the bit width extension, n pieces of data (n is a integer equal to or greater than 2) are processed in parallel to increase a data width by n times. By performing the bit width extension processing, even if the phase relationship of the data is as shown by FIG. 5 (a) to (d), the system 1 data and the system 2 data can be read out by using a clock which is generated from any one of the system 1 data and the system 2 data.

FIGS. 5 (e) to (h) illustrate a clock and data which are shown when the bit width of the data is extended to be doubled through the bit width extension.

In FIG. 5, a system 1 division clock (e) is a divide-by-2 clock of the system 1 clock, (f) is the system 1 data which is processed in parallel in two, (g) is a divide-by-2 clock of the system 2 clock, and (h) is the system 2 data which is processed in parallel in two. FIGS. 5 (e) to (h) illustrate falling timing of the system 1 division clock (e) (M) and falling timing of the system 2 divide-by-2 clock (g) (N).

As shown in Fig. 5, the system 1data (f) and the system 2 data (h) are the data, a bit width of which is extended. In the system 1 data (f) and the system 2 data (h), parallelized data is read out and processed at the same time by a clock. A clock speed in each processing may be a half of the clock without bit width extension processing. The bit width extension operation corresponds to the transition from S2 to S4, and the transition from S3 to S5.

The system 1 data (f) with the extended bit width and the system 2 data (h) with the extended bit width are parallelized in two, while synchronizing the system 1 data (b) and the system 2 data (d) with the clock (a) and the clock (c), respectively. The phase difference between the system 1 (f) with the extended bit width the system 2 data (h) with the extended bit width is equal to the phase difference between the system 1 data (b) and the system 2 data (d) (i.e. a half cycle of the clock (a) or the clock (c)).

The phase difference between the system 1 data (f) with the extended bit width and the system 2 data (h) with the extended bit width is a half cycle of the clock (a) or the clock (c), and the length of the system 1 data (f) and the system 2 data (h) is doubled by parallelization.

Here, falling of the system 1 division clock (e) and the system 2 division clock (g), and the data changing points of the system 1 data (f) and the system 2 data (h) are focused. The falling timing of the system 1 clock (e) and the system 2 clock (g) ((M), (N) in FIG. 5) are located at positions which are different from the changing points of the data (f) and the data (h). Consequently, the (f) and the data (h) can be read out correctly using any one of the system 1 clock (e) and the clock (g).

In the bit width extension operation, the data is parallelized to extend the data width. By extending the data width, the timing of reading out the clocks of systems 1 and 2 ((M), (N) in FIG. 5) can be located at the positions other than the changing points of the data. The signals with different phases can be read out using any clock of the systems 1 and 2. In the first exemplary embodiment, the integration LAN signal 201 and the integration LAN signal 211 correspond to the system 1 data (or the system 2 data) and the system 2 data (or the system 1 data), respectively.

In descriptions above, the parallel number of the data is two, and the clock is divided by two. If the parallel number of the data (i.e. division number of the clock) is equal to or greater than two, the similar effect is possible.

In FIG. 4, the extending unit 23_2 and the extending unit 23_4 output the integration LAN signal 201 and the integration LAN signal 211, bit width extension of which is performed, to a retiming unit 23_5 as the extension signal 23_21 and the extension signal 23_41, respectively.

The retiming unit 23_5 chooses a system which is not invalid data from one of the extension signal 23_21 and the extension signal 23_41. The retiming unit 23_5 compares a phase of a clock of the chosen signal with a phase of a retiming clock 23_61 outputted by a PLL unit 23_6, and outputs a frequency controlling signal 23_51 generated based on the comparison result to the PLL unit to control the PLL. As a result, the retiming unit 23_5 can synchronize the retiming clock 23_61 with the chosen clock.

The extension signal 23_21 and the extension signal 23_41 have the bit width extension processing in the extending unit 23_2 and the extending unit 23_4, respectively. Based on the operation described using FIG. 5, the retiming unit 23_5 performs retiming of the data of both the extension signal 23_21 and the extension signal 23_41 using the retiming clock 23_61 regenerated from one of the data.

The retiming unit 23_5 combines the extension signal 23_21 and the extension signal 23_41 on which retiming is performed so that BYTE data, in which the extension signal 23_21 is arranged in an upper bit string and the extension signal 23_41 is arranged in a lower bit string, is configured. This corresponds to the transition from S4 so S6 and the transition from S5 to S6, in FIG. 2.

The configured BYTE data is outputted to a shortening unit 23_7 as a retiming signal 23_52 (S6 in FIG. 2).

In descriptions above, the BYTE data is configured using the extension signal 23_21 and the extension signal 23_41 if the both signals are normal data. If one of the extension signals is invalid data, the retiming unit 23_5 configures the BYTE data only using the normal extension signal. This corresponds to the transition from S14 to S16.

The shortening unit 23_7 receives the retiming signal 23_52 outputted by the retiming unit 23_5. The shortening unit 23_7 performs operations opposite to the bit width extension which is performed by the extending unit 23_2 and the extending unit 23_4 (transition from S6 to S7 in FIG. 3) and changes the data width into the original width. The shortening unit 23_7 outputs the data with the original bit width to the user network 40 in FIG. 1 as the external output LAN signal 231.

The retiming unit 23_5 chooses one of the extension signal 23_21 and the extension signal 23_41 as a clock source, and outputs it to the PLL unit 23_6. When the retiming unit 23_5 uses by changing the clock source with a selector by itself without using a PLL circuit, instantaneous interruption of the clock or jump of a clock phase may occur. The instantaneous interruption of the clock or the jump of a clock phase causes occurrence of a signal error. In the first exemplary embodiment, therefore, the retiming unit 23_5 works according to the clock outputted by the PLL unit 23_6. Thereby, probability, that the signal error occurs, in the retiming unit 23_5, due to the instantaneous interruption of the clock or the jump of a clock phase at the time of changing the clock source, may be reduced.

The delay correction method and the retiming method in the frame integrating unit 23 which are described above are known as an uninterrupted switching method in a digital radio transmission field. Therefore, detailed descriptions are omitted.

In the first exemplary embodiment, the transmission determining unit 14 in FIG. 1 outputs an alarm state which the radio transmitter apparatus 10 holds to the generating unit 12 and the generating unit 13 as the multiple alarm signals 142 and 143, respectively. An alarm included in the alarm state which is outputted the transmission determining unit 14 includes a reception alarm due to a device failure of the radio transmitting/receiving units 15 and 19 and/or environment change in the radio transmission path, a signal error alarm on the reception signals, and a detection alarm on the invalid data.

The reception alarm due to a device failure of the radio transmitting/receiving units and/or environment change in the radio transmission path is detected in the radio alarm signal 171 and the radio alarm signal 192. The signal error alarm on the reception signal and the detection alarm on the invalid data are detected in the reception alarm signal 202 and the reception alarm signal 212.

When detecting the reception alarm detected by the radio transmitter apparatus 30 or the signal error alarm of the reception signal in the reception alarm signal 202 or the reception alarm signal 212, the transmission determining unit 14 determines that a signal of the system in which these alarms are detected is invalid data. Determining that a signal of the system in which these alarms are detected is invalid data, the transmission determining unit 14 outputs the division control signal 141 instructing to determine that the signal of the system is the invalid data to the frame dividing unit 11.

The reception determining unit 22 receives the radio alarm signal 171 and the radio alarm signal 192. The reception determining unit 22 detects a device failure alarm of the radio transmitting /receiving unit and/or a reception power reduction alarm due to the environment change on the radio transmission path in these radio alarm signals. Detecting the device failure alarm or the reception power reduction Alarm, the reception determining unit 22 outputs a control signal determining the data of the system in which the alarm occurs is the invalid data as the integration control signals 221 and 222.

A first effect of the radio transmission system of the first exemplary embodiment described above is that it is possible to suppress complexity of configuration and price increase in the transmitter apparatus with the adaptive modulation function. Is the radio transmission system of the first exemplary embodiment, the radio transmitter apparatus includes the adaptive modulation function. In the radio transmitter apparatus, the radio transmitting units of the two systems modulate data using the same modulation scheme. That is, in the radio transmission system of the first exemplary embodiment, the transmitting apparatus on the transmission side can choose a suitable modulation scheme depending on conditions of a plurality of the transmission at and the transmitting apparatus on the reception side can receive divided data at the same modulation speed. Accordingly the transmitting apparatus on the reception side does not require memory for absorbing a difference of transmission speeds between the respective reception data and can suppress complexity of the configuration and price increase in the transmitter apparatus with the adaptive modulation function.

A second effect of the radio transmission system of the first exemplary embodiment is that it is possible to easily increase a radio transmission capacity in the radio transmitting apparatus for transmitting the MAC frame of the LAN signal from the user network to a single opposed station wirelessly.

Procedures obtaining the effects are as follows. The radio transmitter apparatus of the first exemplary embodiment divides the MAC frame into two parts in its own apparatus and inserts the synchronization pattern at a constant period. The radio transmitter apparatus of the first exemplary embodiment transmits the divided data from the radio transmitting/receiving units of the two systems arranged in its own apparatus to the radio-opposed stations. The opposed radio transmitter apparatus detects the propagation delay difference which occurs due to the electric length difference in the radio transmitting/receiving unit, the cable, the radio transmission path, and the like, by using the synchronization pattern in the reception signal. The opposed radio transmitter apparatus adjusts the phases of both of the MAC frames to absorb the propagation delay difference. After absorbing the propagation delay difference, the radio transmitter apparatus integrates the MAC frames which are divided in two parts into a single MAC frame. As a result, the radio transmission system of the first exemplary embodiment may include the transmission capacity which is twice as much as that of MAC frame transmission on the single radio transmission path.

A third effect of the first exemplary embodiment is that even though it is impossible to transmit data because of a device failure of one of the radio transmitting/receiving its and/or degradation of a propagation condition of the radio transmission path, signal transmission may be performed using the other normal system.

That is because the generating unit of the radio transmitter apparatus inserts the signal error detecting code to perform the radio transmission. The radio transmitter apparatus detects abnormality on the radio transmission path based on the detection result of the reception power reduction alarm in the radio transmitting /receiving unit and the result of signal error detection in the analyzing unit. When detecting abnormality on the radio transmission path, the radio transmitter apparatus informs the radio-opposed station of the abnormal condition of the system on which abnormality is detected. In the radio transmitter apparatus, if the analyzing unit detects the information on the abnormal condition from the radio-opposed station, the frame dividing unit stops dividing the MAC frame. The radio transmitter apparatus transmits the invalid data to the system in which the abnormal condition occurs, and the MAC frame data only to the system which normally works. Is the radio transmitter apparatus opposed thereto, the frame integrating unit integrates two divided signals to form the MAC frame if the integration LAN signal outputted by the analyzing unit is normal. If one of received divided data is the invalid data, the radio transmitter apparatus restores the MAC frame using only the data which is received from the normal system. As a result, in the radio transmission system of the first exemplary embodiment, even if abnormality occurs in one system, signal transmission may continue in the other normal system.

A fourth effect of the first exemplary embodiment is that it is possible to avoid occurrence of order replacement of the MAC frame which occurs when the MAC frames having random length are delivered and transmitted to a plurality of the transmission paths.

That is because in the first exemplary embodiment, the radio transmitter apparatus does not allocate the MAC frames to respective transmission path in a unit of the MAC frame, but divide inputted MAC frame into two parts and transmits them without replacing the order of the MAC frames. As a result, the radio transmitter apparatus opposed thereto integrates the data received from the radio transmission path in order of reception to restore the MAC frame of the LAN signal. The radio transmission system of the first exemplary embodiment can avoid occurrence of order replacement of the MAC frame.

Is the first exemplary embodiment, the adaptive modulation determining unit 18 chooses the modulation scheme on the basis of the magnitude relationship between the radio reception power in the opposed radio transmitter apparatus 30 and a predetermined threshold value. However, the adaptive modulation determining unit 18 may choose the the modulation scheme based on other information. The opposed radio transmitter apparatus 30 may transmit, for example, CNR (Carrier to Noise Ratio, i.e. Carrier wave power to Noise power Ratio) of the signal received from the radio transmitter apparatus 10, and/or an error rate of the reception signal to the radio transmitter apparatus 10. The adaptive modulation determining unit 18 of the radio transmitter apparatus 10 may choose the modulation scheme of the radio transmitting unit 16 or the radio transmitting unit 16A based on the CNR or the error rate received from the radio transmitter apparatus 30.

In the first exemplary embodiment, the adaptive modulation determining units 18 and 18A of the radio transmitter apparatus 10 choose the modulation scheme so that the transmission speeds of the transmission signals 121 and 131 accord with each other. However, if a difference in the transmission speeds between the transmission signals 121 and 131 is small, the problem of complexity of the configuration of the radio transmitter apparatus 30 for receiving the transmission signals 12 and 131 and price increase thereof may not occur. For example, if the radio transmitter apparatus on the reception side does not require memory with a large amount of capacity even though the transmission signals 121 and 131 differ in the transmission speed from each other, the effect of the invention, in which it is possible to suppress complexity of the configuration of the radio transmitter apparatus and price increase thereof, is not lost,

When the radio transmitter apparatus on the reception side allows some degree of difference of the transmission speeds, the adaptive modulation determining units 18 and 18A may not necessarily decide the modulation scheme having the same transmission speed.

For example, the adaptive modulation determining units 18 and 18A may decide the modulation scheme so that the difference in the transmission speeds between the modulation schemes decided in the unit 18 and 18A falls within a predetermined range.

The adaptive modulation determining units 18 and 18A may decide the range of the difference in the transmission speeds between the modulation schemes to be decided based on the allowable range of the transmission speed for the receiver apparatus.

### [Second exemplary embodiment]

In the first exemplary embodiment, the radio transmitter apparatus include the configuration in which the inputted MAC frame is divided into two parts and transmitted. The MAC frame is not necessarily divided into two parts.

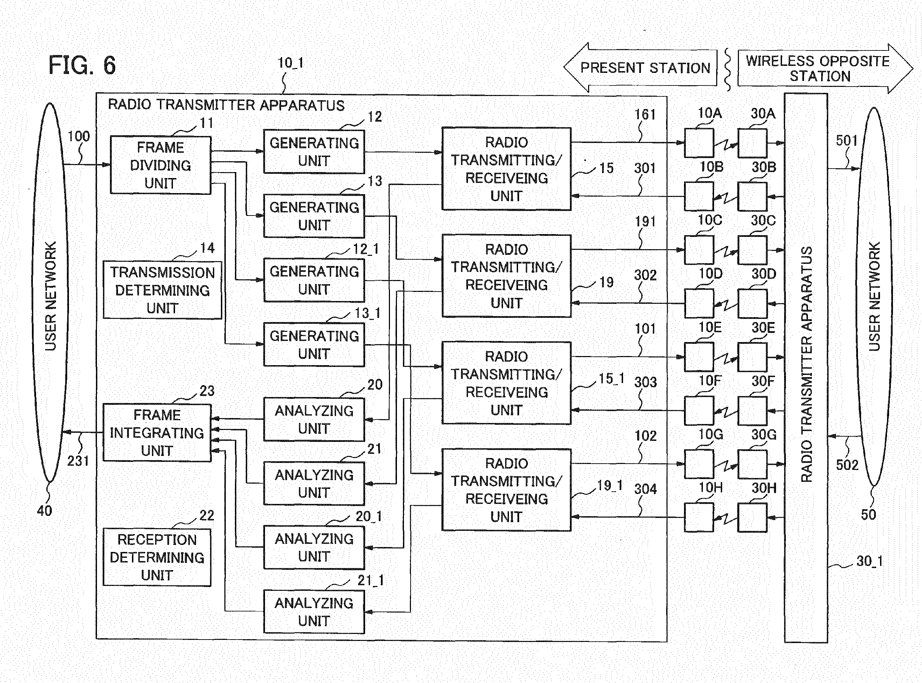

FIG. 6 is a diagram illustrating a radio transmitter apparatus of a second exemplary embodiment of the invention. A radio transmitter apparatus 10_1 shown in FIG. 6 includes a function for dividing the MAC frame into four parts and transmitting them to an opposed radio transmitter apparatus 30_1. In FIG. 6, an operation of each part in the radio transmitter apparatus 10_1 is the same as that of the part with the same name in the radio transmitter apparatus 10. In FIG. 6, therefore, description on detailed connection of respective parts and the inside of the radio transmitter apparatus is omitted.

In FIG. the radio transmitter apparatus 10_1 faces the radio transmitter apparatus 30_1 and the apparatuses transmit the MAC frame to each other. The radio transmitter apparatus 10_1 divides the external LAN signal 100 which is inputted from the user network 40 and transmits them to the radio transmitter apparatus 30_1 as a radio signal. The radio transmitter apparatus 30_1 restores data from the radio signal received from the radio transmitter apparatus 10_1 and outputs it to the user network 50 as the external output LAWN signal 501.

The radio transmitter apparatus 30_1 divides the external LAN signal 502 which is inputted from the user network 50 and transmits them to the radio transmitter apparatus 10_1 as a radio signal. The radio transmitter apparatus 10_1 restores data from the radio signal received from the radio transmitter apparatus 30_1 and outputs it to the user network 40 as the external output LAN signal 231.

The radio transmission apparatus shown in FIG. 6 divides the MAC frame into four parts in the frame dividing unit 11 and transmits them. For this, the apparatus includes four generating units 12, 13, 12_1, and 13_1, four analyzing units 20, 21, 20_1, and 21_1, and four radio transmitting/receiving units 15, 19, 15_1, and 19_1. Each radio transmitting/receiving unit includes the adaptive modulation function. The four radio transmitting/receiving units 15, 19, 15_1, and 19_1 inform of information of the modulation scheme the radio transmitter apparatus each other, and operate so that all of the radio transmitting/receiving units use the modulation scheme with the same transmission speed.

A configuration and operations of each part of the radio transmitter apparatus 10A are similar to those of the radio transmitter apparatus 10 described in the first exemplary embodiment. Therefore, detailed descriptions on the parts are omitted.

The radio transmitting/receiving unit 15 modulates the MAC frame which is outputted from the generating unit 12 and divided, and outputs them as the radio signal 161. The radio signal 161 is transmitted to the radio transmitter apparatus 30_1 through the antennas 10A and 30A.

Similarly, the generating units 13, 12_1 and 13_1 output divided frame to the radio transmitting/receiving units 19, 15_1 and 19_1, respectively. The radio transmitting/receiving units 19, 15_1 and 19_1 modulate inputted signals and output the radio signals 191, 101 and 102, respectively. The radio signals 191, 101 and 102 are transmitted to the radio transmitter apparatus 30_1 through the antennas 10C, 10E and 10G, and the antennas 30C, 30E and 30G, respectively.

The radio transmitting/receiving unit 15 receives the radio signal 301 which is transmitted by the radio transmitter apparatus 30_1 through the antennas 30B and 10B. The radio transmitting/receiving unit 15 demodulates the radio signal 301 and outputs it to the unit 20. The analyzing unit 20 separates the divided MAC frame 23 from the demodulated signal, and outputs them to the frame integrating unit 23. The frame integrating unit 23 integrates the divided frames which are received from the analyzing units 20, 21, 20_1 and 21_1, and outputs it to the user network 40 as the external output LAN signal 231.

Similarly, the radio transmitting/receiving units 19, 15_1 and 19_1 receive the radio signals 302, 303 and 304 which are transmitted by the radio transmitter apparatus 30_1 through the antennas 30D, 30F and 30H, and 10D, 10F and 10H, respectively. The radio transmitting/receiving units 19, 15_1 and 19_1 demodulate these radio signals and output them to the analyzing units 21, 20_1 and 21_1, respectively. Each analyzing unit separates the MAC which is divided from the demodulated signal, and outputs it to the frame integrating unit 23.

Transmitting the MAC frame after dividing it in four parts, the radio transmission system of the second exemplary embodiment can transmit the MAC frame at a high transmission speed, compared with the first exemplary embodiment, in addition to the effect of the first exemplary embodiment.

In the first and second exemplary embodiment, the invention is explained with the case of its application to the radio transmission system with the radio transmitter apparatus. However, the invention is not limited to radio transmission. The invention is applicable to, for example, a wired transmitter apparatus with a coaxial cable or an optical fiber.

The scheme of the radio transmission targeted by the invention is not limited a scheme using a radio wave. The invention is applicable to, for example, a transmitter apparatus using an optical space transmission scheme.

### [Third exemplary embodiment]

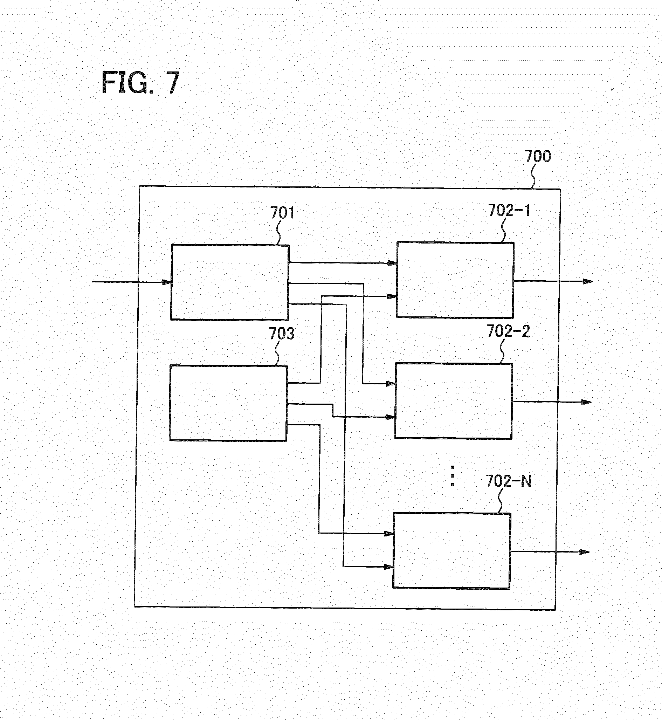

FIG. 7 is a diagram illustrating a configuration of a transmitter apparatus of a third exemplary embodiment of the invention. In FIG. 7, a transmitter apparatus 700 includes a dividing unit 701, N pieces of transmitting units 702_1 to 702_N,N pieces of transmitting units 702_1 to 702_N, and a modulation scheme deciding unit 703.

The dividing unit 701 divides inputted data into a plurality of pierces. The transmitting units 702_1 to 702_N transmit divided data on transmission paths. The modulation scheme deciding unit 703 decides the modulation scheme, used by transmitting means, of schemes associated with conditions of the transmission paths so that the difference in the transmission speeds between a plurality of pieces of data transmitted by the plurality of transmitting means falls within a predetermined range.

The transmitter apparatus of FIG. 7 transmits at divided by the dividing unit 701 on the transmission paths using the plurality of transmitting units 702_1 to 702_N. The modulation schemes used by the transmitting units are associated with conditions of the transmission paths where the data is transmitted. The modulation scheme deciding unit 703 decides the modulation schemes by which the transmitting unit 702_1 to 702_N modulate the data from among these modulation schemes so that the difference in the transmission speeds between a plurality of pieces of data transmitted by the plurality of transmitting means falls within a predetermined range.

When the modulation scheme deciding unit 703 decides the modulation schemes used by the transmitting units 702_1 to 702_N based on the modulation schemes associated with the transmitting units 702_1 to 702_N, complexity of a configuration of the transmitter apparatus on the reception side which is not shown, and price increase thereof are avoided.

If the modulation scheme deciding unit 703 restricts the difference in the transmission speeds between the modulation schemes simultaneously used by the transmitting units 702_1 to 702_N, the range of the speeds of the modulation scheme to be processed at the same time and data are limited in the transmitter apparatus on the reception side. When the speeds of the modulation schemes falls within a predetermined range, the transmitter apparatus does not require memory with a large capacity for absorbing the difference in the transmission speeds between respective pieces of reception data.

Consequently, the transmitter apparatus of the third exemplary embodiment enable to suppress complexity of the transmitter apparatus and price increase thereof, if the transmitter apparatus with the adaptive modulation function divides data and transmits them.

While having described an invention of the present application referring to the embodiments 1 to 3, the invention of the present application is not limited to the above mentioned embodiments 1 to 3. It is to be understood that to the configurations and details of the invention of the present application, various changes can be made within the scope of the invention of the present application by those skilled in the art.

This application is based upon and claims the benefit of priority from Japanese patent application No. 2010-058982 filed on March 16, 2010, the disclosure of which is incorporated herein in its entirety by reference.

### REFERENCE SIGNS LIST

10, 10_1, 30, 30_1 Radio Transmitter Apparatus
40, 50 User Network
11 Frame Dividing Unit
12, 13, 12_1, 13_1 Generating Unit
20, 21, 20_1, 21_1 Analyzing Unit
14 Transmission Determining Unit
15, 15_1, 19, 19_1 Radio Transmitting/Receiving Unit
16, 16A Radio Transmitting Unit
17, 17A Radio Receiving Unit
18, 18A Adaptive Modulation Deciding Unit
22 Reception Determining Unit
23 Frame Integrating Unit
23_1, 23_3 Delay Correcting Unit
23_2, 23_4 Extending Unit
23_5 Retiming Unit
23_6 PLL Unit
23_7 Shortening Unit
10a to 10h, 30a to 30h Antenna
700 Transmitter Apparatus
701 Dividing Unit
702_1 to 702_N Transmitting Unit
703 Modulation Scheme Deciding Unit
100, 501 External LAN Signal
111, 112 Divided LAN Signal
121, 131 Transmission Signal
101, 102, 161, 191, 301 to 304 Radio Signal
181, 181 A Modulation Control Signal
141 Division Control Signal
142, 143 Multiple Alarm Signal
171, 192 Radio Alarm Signal
172, 193 Reception Signal
201, 211 Integration LAN Signal
202, 212 Reception Alarm Signal
221, 222 Integration Control Signal
23_21, 23_41 Extension Signal
23_51 Frequency Control Signal
23_52 Retiming Signal
23_61 Retiming Clock
231, 502 External Output LAN Signal

## Claims

1. A transmitter apparatus, comprising:
a dividing means for dividing input data into a plurality of pieces of data;
a plurality of transmitting means for transmitting the pieces of data as divided to respective transmission paths; and
a modulation scheme deciding means for deciding, from among modulation schemes associated with the conditions of the transmission paths, a modulation scheme, that is to be used by the transmission means, such that a difference in transmission speeds between the pieces of data transmitted by the plurality of transmitting means is within a predetermined range.

2. The transmitter apparatus of claim 1, wherein the modulation scheme deciding means decides the predetermined range on the basis of a range of the transmission speed where a receiver apparatus for receiving the pieces of data as transmitted is capable of receiving the pieces of data.

3. The transmitter apparatus of claim 1 or claim 2, wherein the modulation scheme deciding means decides the modulation scheme that is to be used by the transmission means such that the transmission speeds between the pieces of data as divided transmitted by the plurality of transmitting means accord with each other.

4. The transmitter apparatus of any one of claims 1 to 3, further comprising:
a determining means for instructing the dividing means to stop dividing the data on the basis of failure information generated by the transmitter apparatus or failure information generated by a transmitter apparatus that is opposed to the transmitter apparatus.

5. The transmitter apparatus of any one of claims 1 to 4, further comprising:
a plurality of receiving means for receiving the plurality of pieces of data that are divided and transmitted; and
an integrating means for integrating and outputting the plurality of pieces of data.

6. A transmission system, wherein the transmitter apparatus of claim 5 is arranged so that the pieces of data as divided that are transmitted from the transmitting means of the transmitter apparatus are received by the receiving means of the different transmitter apparatus.

7. A transmission method, comprising the steps of:
dividing input data into a plurality of pieces of data;
transmitting the pieces of as divided to respective transmission paths; and
deciding, from among modulation schemes associated with the conditions of the transmission paths, a modulation scheme of the data, such that the difference in transmission speeds between the pieces of data that is transmitted is within a predetermined range.

8. The transmission method of claim 7, wherein the predetermined range is decided on the basis of a range of the transmission speeds where the pieces of data that are transmitted can be received.

9. The transmission method of claim 7 or claim 8, wherein the modulation scheme is decided so that the transmission speeds of the pieces of divided data accord with each other.

10. The transmission method of any one of claims 7 to 9, further comprising
instructing to stop dividing the data on the basis of failure information.
